# EUROPEAN PATENT APPLICATION

(11) **EP 4 596 762 A1**
(43) Date of publication of application: **06.08.2025**
(21) Application number: 24815205.0
(22) Date of filing: 15.05.2024
(51) Int. Cl.: C25D 15/02, C22C 1/10, F16C 33/12, F16C 33/14

(54) **BISMUTH-BASED OVERLAY LAYER FOR SLIDING MEMBER**

(30) Priority: 31.05.2023 JP 2023090310
(71) Applicant: Daido Metal Co., Ltd., Nagoya-shi, Aichi 460-0008 (JP)
(72) Inventor: KHAN, Zakir, Somerset, TA199PH (GB); BAJWA, Rizwan, Somerset, TA199PH (GB); ZHANG, Yi, Somerset, TA199PH (GB); HANEDA, Yuma, Inuyama-shi, Aichi 484-0061 (JP)
(74) Representative: Winter, Brandl - Partnerschaft mbB
(86) International application number: PCT/JP2024/017889
(87) International publication number: WO 2024/247721

(57) **Abstract**

Provided is a bismuth-based overlay layer having high fatigue resistance even when additive particles are contained. In the present invention, the bismuth-based overlay layer for a sliding member includes a polycrystalline matrix containing crystal particles including a material containing bismuth or a bismuth alloy, and additive particles dispersed in the matrix, and the matrix includes a region in which the crystal particles having a GOS (Grain Orientation Spread) of 1 degree or less account for 85% or more of all the crystal particles.

## Description

### TECHNICAL FIELD

The present invention relates to a bismuth-based overlay layer for a sliding member, a method for manufacturing the bismuth-based overlay layer, and an improvement of a sliding member including the overlay layer.

### BACKGROUND ART

Bismuth is employed as a matrix of an overlay layer for a sliding member from the viewpoint of reducing environmental load and the like. The bismuth-based overlay layer can contain hard particles or solid lubricating particles. As a result, wear resistance and low friction properties are obtained in the overlay layer (Patent Literature 1 and Patent Literature 2).

In addition, refer to Patent Literature 3 as a prior art related to the present invention.

### CITATIONS LIST

### PATENT LITERATURE

Patent Literature 1: JP 2003-156046 A
Patent Literature 2: JP 6905926 B
Patent Literature 3: GB 2534120 A

### SUMMARY OF INVENTION

### TECHNICAL PROBLEMS

When the sliding member is used as a bearing of a recent high-power engine, it has been found that the bismuth-based overlay layer containing hard particles or solid lubricating particles as described above has the following problems.

That is, since bismuth is used as a base for a matrix, brittleness derived from bismuth characteristics affects the overlay layer, and the overlay layer is likely to fatigue.

It has been generally considered that fatigue resistance of the bismuth-based overlay layer containing hard particles or solid lubricating particles is inferior to the fatigue resistance of the bismuth-based overlay layer not containing these particles.

Additive particles such as hard particles and solid lubricating particles impart wear resistance and low friction properties to the bismuth-based overlay layer. Therefore, when the bismuth-based overlay layer is applied to the sliding member applied to the bearing and the like of the high-power engine, it is required to contain the additive particles in the bismuth-based overlay layer.

### SOLUTIONS TO PROBLEMS

As a result of intensive studies to solve the above problems, the present inventors have focused on misorientation of crystal particles constituting the matrix of the bismuth-based overlay layer, and have arrived at the following invention. That is, a first aspect of the present invention is defined as follows.

A bismuth-based overlay layer for a sliding member, comprising:
a polycrystalline matrix containing crystal particles comprising a material containing bismuth or a bismuth alloy; and
additive particles dispersed in the matrix,
wherein the matrix includes a region in which the crystal particles having a GOS (Grain Orientation Spread) of 1 degree or less account for 85% or more of all the crystal particles.

According to the bismuth-based overlay layer of the first aspect defined as described above, the fatigue resistance of the bismuth-based overlay layer is improved while maintaining the characteristics (wear resistance, low friction properties, and the like) that the additive particles impart to the overlay layer.

It is considered that since crystal particles having a GOS of 1 degree or less are less likely to be a starting point of cracks, by adjusting the ratio to 85% or more, fatigue caused by cracks is less likely to occur in the matrix.

Here, a ratio of crystal particles refers to a number ratio of crystal particles.

A layer thickness of the overlay layer is not particularly limited, and is appropriately selected according to the use of the sliding member and the like.

The bismuth alloy is an alloy containing bismuth (Bi) as a main component with one or two or more selected from lead (Pb), indium (In), tin (Sn), antimony (Sb), and the like.

An average particle diameter of the crystal particles constituting the matrix can be from 0.1 µm to 5.0 µm. As a method for measuring the average particle diameter, an arbitrary crystal particle observation method is used for an overlay sample cross section, and a "maximum Feret diameter" (the longest distance between any two points on a contour of the particle) is measured by image analysis software to calculate the average value.

The GOS refers to an average value of misorientations between a certain measurement point and all remaining measurement points in the crystal particle. For more details, see "Misorientation Analysis of Plastic Deformation of Austenitic Stainless Steel by EBSD and X-Ray Diffraction Methods" by Kimura et al., Transactions of the Japan Society of Mechanical Engineers. A., Vol. 71, No. 712 (2005-12). The contents of this paper are incorporated herein by reference.

The hard particles as additive particles reinforce mechanical properties of the bismuth-based overlay layer.

As the additive particles for reinforcing the wear resistance of the bismuth-based overlay layer, particles harder than bismuth or a bismuth alloy are adopted. As such hard particles, one or two or more selected from carbon fibers, glass fibers, boron nitride, aluminum oxide, silicon carbide, silicon oxide, aluminum nitride, and titanium oxide can be used. The average particle diameter of the hard particles can be from 1 nm to 10 µm. The average particle diameter is more preferably from 0.1 µm to 3.0 µm. The average particle diameter of the hard particles can be obtained by measurement by a laser diffraction/scattering method before charging them into a plating solution.

As the additive particles for reinforcing the low friction properties of the bismuth-based overlay layer, solid lubricating particles are employed. As such solid lubricating particles, one or two or more selected from plate-shaped crystal particles of molybdenum disulfide, graphite, tungsten disulfide, and boron nitride can be used.

The average particle diameter of the solid lubricating particles can be from 1 nm to 5.0 µm. The average particle diameter is more preferably from 0.1 µm to 3.0 µm. It is easier to control the GOS when the solid lubricating particles have a granular shape rather than a plate shape. The average particle diameter of the solid lubricating particles can be obtained by measurement by a laser diffraction/scattering method before charging them into a plating solution.

The additive particles are not limited to hard particles and solid lubricating particles, and any other additive particles can be contained in an arbitrary blending amount in order to improve an overlay function such as adhesiveness, corrosion resistance, lipophilicity, and oil repellency.

A content of the additive particles can be from 1.0 to 15.0 vol% in the matrix (second aspect). By setting the content of the additive particles within this range, characteristics derived from the additive particles can be suitably exhibited in the bismuth-based overlay layer.

When a matrix containing 85% or more of crystal particles containing bismuth or a bismuth alloy having a GOS of 1 degree or less is employed, a proportion of the crystal particles having a GOS of 1 degree or less can be further increased in the case of containing the additive particles in the above range as compared with the case of not containing the additive particles.

The hardness of the bismuth-based overlay layer is preferably 20 HV or more (third aspect). The overlay layer having such hardness is excellent in wear resistance.

The hardness of the bismuth-based overlay layer can be adjusted by changing the content of the hard particles. The amount of hard particles is preferably selected from 1.0 to 15.0 vol% in order to control the proportion of crystal particles having a GOS of 1 degree or less as described above.

A method for manufacturing the sliding member including the bismuth-based overlay layer can be defined as follows.

A method for manufacturing a sliding member comprising:
treating a surface of additive particles to control wettability of the surface;
charging the additive particles having the treated surface into a plating solution for bismuth or a bismuth alloy and stirring the solution;
providing a substrate of the sliding member; and
depositing the plating solution into which the additive particles are charged on a surface of the substrate of the sliding member to form a bismuth-based overlaying layer.

In the above method, in order to control the wettability of the surface of the additive particles, any treatment method such as plasma treatment or UV irradiation treatment on the surface can be selected.

By controlling the wettability of the surface of the additive particles to increase the wettability, aggregation among the additive particles in the plating solution is prevented. This increases dispersibility of the additive particles.

An amount of the additive particles in the plating solution is preferably from 15 g to 150 g per L of the plating solution. The amount of the additive particles is more preferably from 40 g to 120 g/L. Thereby, it can be easily achieved that the crystal particles having a GOS of 1 degree or less in bismuth or a bismuth alloy constituting the matrix of the bismuth-based overlay layer account for 85% or more of all the crystal particles. Although it is required to sufficiently stir the plating solution, it is not necessary to control the stirring condition severely.

### BRIEF DESCRIPTION OF DRAWINGS

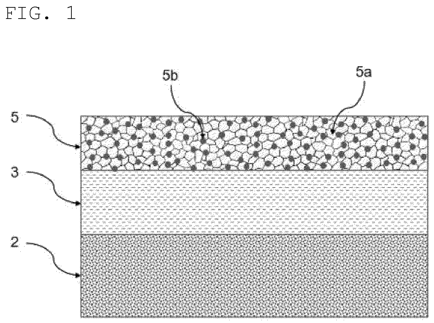

FIG. 1 is a schematic view showing a sliding member according to an embodiment of the present invention.

### DESCRIPTION OF EMBODIMENT

Hereinafter, an embodiment of the present invention will be described.

As shown in FIG. 1, a sliding member 1 according to the embodiment of the present invention has a structure in which a bearing alloy layer 3 and a bismuth-based overlay layer 5 are sequentially deposited on a backing metal layer 2.

The backing metal layer 2 applied to the sliding member 1 is formed of a general steel material, and a soft metal material such as copper or a copper alloy is used for the bearing alloy layer 3. An intermediate layer formed of Ag, Ni, or the like may be formed on the bearing alloy layer.

The shape of the sliding member 1 can be arbitrarily designed according to the diameter and operation of a sliding partner (member to be in slidable contact with the sliding member).

A matrix 5a of the bismuth-based overlay layer 5 is polycrystalline including bismuth or a bismuth alloy. The additive particles 5b are uniformly dispersed in the matrix 5a.

This bismuth-based overlay layer 5 can be produced by a known method such as electroplating, vacuum sputtering, or thermal and cold spraying.

In this example, a bismuth-based overlay layer was prepared by adopting an electroplating method.

First, a plating solution for bismuth is provided. The plating solution is not particularly limited, and a plating solution capable of composite plating is appropriately selected in consideration of compatibility with the additive particles. A sulfonic acid bath was used this time.

The additive particles are subjected to a UV treatment to make the surfaces of the additive particles easily wet with a plating solution. A UV treatment apparatus is manufactured by ASUMI GIKEN, Limited (UV surface cleaning and modifying apparatus, model number: ASM1101N). The condition is controlled by illuminance of from 0.1 mW/cm² to 30 mW/cm² and treatment time of 5 minutes to 48 hours with a total power irradiator of from 5 W to 250 W. The wavelength was selected in a range of from 185 nm to 365 nm.

An addition amount of the additive particles to the plating solution is from 15 g/L to 150 g/L, preferably from 40 g/L to 120 g/L.

The plating solution to which the additive particles were added is sufficiently stirred to prevent the additive particles from aggregating. The stirring condition is not particularly limited, but it is preferable to use ultrasonic stirring and mechanical stirring in combination for 0.2 hours to 2.0 hours, preferably 1.0 hour. QS12 manufactured by Ultrawave Ltd was used as an ultrasonically stirring machine, and the stirring condition was an ultrasonic frequency of from 32 to 38 kHz and an ultrasonic output of 200 W. On the other hand, MICROSTAR 7.5 control manufactured by IKA England Limited was used as a mechanically stirring machine, and stirring was performed under the condition of from 110 to 2000 rpm, preferably from 600 to 1000 rpm.

The bismuth-based overlay layer 5 was formed as follows.

The surface of the bearing alloy layer 3 is cleaned and degreased by a general-purpose method.

The surface of the bearing alloy layer 3 was brought into contact with a plating solution to which additive particles were added and the plating solution was sufficiently stirred, and electroplating was performed under the conditions of a current density of from 1 to 6 A/dm² and a plating bath temperature of from 20 to 50°C.

It can be understood by those skilled in the art that these plating conditions are not fixed and are appropriately selected based on an experience of a plating operator.

The thickness of the bismuth-based overlay layer 5 was 15 µm. The thickness is not limited to this, and is preferably up to 30 µm from the viewpoint of fatigue resistance.

The characteristics of the bismuth-based overlay layer 5 of Examples and Comparative Examples are shown in Tables 1 and 2.

**[Table 1]**

| | Proportion of GOS of 1 degree or less (%) | Additive particles | UV integrated light amount (mJ/cm²) with respect to additive particles | Fatigue area ratio (%) |
|---|---|---|---|---|
| Example 1 | 95.9 | SiC | 63000 | 5 |
| Example 2 | 90.0 | SiC | 55000 | 5 |
| Example 3 | 86.1 | SiC | 48000 | 10 |
| Example 4 | 96.8 | Si₃N₄ | 63000 | 5 |
| Example 5 | 88.8 | hBN | 55000 | 10 |
| Comparative Example 1 | 84.5 | SiC | 6000 | 30 |
| Comparative Example 2 | 80.6 | SiC | Absence | 45 |
| Comparative Example 3 | 75.2 | Si₃N₄ | Absence | 60 |

In the above table, the integrated light amount is expressed as a product of illuminance (mW/cm²) and time (second).

**[Table 2]**

| | Proporti on of GOS of 1 degree or less (%) | Additiv e particl es | Amount (vol%) of additiv e particl es in coating film | Fatig ue area ratio (%) | Hardne ss (HV) | Wear amoun t (µm) |
|---|---|---|---|---|---|---|
| Example 6 | 86.3 | SiC | 0.5 | 10 | 18 | 2.8 |
| Example 7 | 92.1 | SiC | 1.0 | 5 | 20 | 1.4 |
| Example 8 | 95.0 | SiC | 5.0 | 5 | 20 | 1.2 |
| Example 9 | 93.9 | SiC | 11.0 | 5 | 22 | 1.0 |
| Example 10 | 90.1 | SiC | 15.0 | 5 | 25 | 0.8 |
| Example 11 | 85.4 | SiC | 20.3 | 10 | 27 | 0.5 |

From the results of Example 3 and Comparative Example 1 in Table 1, it is found that when the proportion of crystal particles having a GOS of 1 degree or less is 85% or more of all the crystal particles, a fatigue area is narrowed and the fatigue resistance is improved. The proportion is more preferably 90% or more (see Example 2 and Example 3).

As shown in Table 2, from the results of Examples 6 to 11 in which the additive particles were made of SiC and the content (vol%) of the additive particles was changed, when the content of the additive particle was from 0.5 vol% to 20.3 vol%, the proportion of crystal particles having a GOS of 1 degree or less could account for 85% or more of all the crystal particles.

When the content of SiC as a hard particle increases, the proportion of a GOS of 1 degree or less tends to increase, and when the content exceeds a predetermined amount, the proportion tends to decrease. On the other hand, the content of 1.0 vol% or more was more excellent in terms of wear resistance.

From the above, according to the study of the present inventors, the content of the additive particles is preferably from 1.0 vol% to 15.0 vol%.

In the above, the GOS was obtained as follows.

Samples of Examples and Comparative Examples before performing the fatigue test were provided as follows.

Cutting was performed in a desired area (a portion assumed to have the highest load in Examples and Comparative Examples), and mechanical polishing was performed on a cut surface of a resin-embedded sample. The mechanical polishing was performed through the steps of paper polishing, buff polishing (diamond slurry), and polishing (colloidal silica). A polished surface was subjected to conductive coating (carbon, gold, etc.), and then ion milling was performed.
EBSD device: product name (registered trademark) FEI Versa 3D DualBeam SEM equipped with Symmetry-2 EBSD detector
Measurement conditions: scan area; 100 µm × 22.9 µm, step size; 30 nm, collection speed; about 2000 cps, magnification; 4000 times, crystal grain definition; orientation difference of 10 degrees or more

In the above, the step size was set so that 10 or more measurement points could be secured within the particle of the crystal having the smallest particle diameter. The scanning pattern can be a square lattice or a hexagonal lattice, and can be arbitrarily determined by a crystal structure.

A measurement region (scan region) can be arbitrarily set so as to include 1000 or more crystal particles in overlay in order to increase measurement accuracy.

An EBSD image thus obtained was processed with data analysis software to obtain the GOS of all crystal particles included in the scan area, and the proportion of crystal particles having a GOS of 1 degree or less included therein was calculated. When clear noise was confirmed, noise removal processing (Examples and Comparative Examples used Auto Clean-up function of EBSD data analysis software AZtecCrystal manufactured by Oxford Instruments) was performed.

According to the study of the present inventors, in the bismuth-based overlay layer produced by electroplating, the proportion of crystal particles having a GOS of 1 degree or less was almost the same in all the observed regions.

Conditions of the fatigue test are as follows.
Bearing dimension: Φ 56 × L 14.2 × t 1.5 (mm)
Oil clearance: 0.060 (mm)
Rotation speed: 3600 (rpm)
Load: 100 (MPa)
Frequency: 60 (Hz)
Lubricating oil: VG68
Oil supply temperature: 110 (°C)
Shaft material: S55C Quenching
Shaft roughness: Ra 0.05 ± 0.01 (um)
Test time: 20 (hours)
Load application method: The load was increased from 0 load every 15 minutes, and a load of 100 MPa was continuously applied for 20 hours after 1 hour and a half.

After a load is repeatedly applied from a radial direction to a cylindrical sliding member (bearing) into which a rotating shaft is fitted, a surface of an overlay layer of the sliding member as a sample is observed. In this surface, a cracked portion is recognized as a fatigue portion. An image obtained by photographing an overlay surface of the sliding member with a microscope (VHX-8000 manufactured by KEYENCE CORPORATION) is subjected to an attached software treatment to calculate an area ratio of the cracked portion to the entire surface. The obtained area ratio is shown as a fatigue area ratio in Tables 1 and 2. When the fatigue area ratio is 20% or less, it is considered that the sample has fatigue resistance.

The amount (vol%) of the additive particles in a coating film (bismuth-based overlay layer) is an area ratio by cross-section observation (area ratio of the additive particles to the entire overlay).

The hardness HV is measured from a cross-sectional sample by a micro Vickers hardness tester (HM-220 manufactured by Mitutoyo Corporation).

The wear amount was obtained as follows. In the overlay layer before and after the test, the thickness at a position of 1 mm from an end was measured with a wall thickness measuring instrument (manufactured by own company), and an amount of change in wall thickness (wear amount) after the test was obtained. The result in Table 2 is an average value at two positions of 1 mm from a left end and 1 mm from a right end.

The present invention is not limited to the description of the above embodiment of the invention. Various modifications within the scope easily devised by those skilled in the art without departing from the description of the scope of claims are also included in the present invention.

### REFERENCE SIGNS LIST

- 1: sliding member
- 2: backing metal layer
- 3: bearing alloy layer
- 5: bismuth-based overlay layer

## Claims

1. A bismuth-based overlay layer for a sliding member, comprising:
a polycrystalline matrix containing crystal particles comprising a material containing bismuth or a bismuth alloy; and
additive particles dispersed in the matrix,
wherein the matrix includes a region in which the crystal particles having a GOS (Grain Orientation Spread) of 1 degree or less account for 85% or more of all the crystal particles.

2. The bismuth-based overlay layer according to claim 1, wherein a content of the additive particles is from 1.0 vol% to 15.0 vol% in the matrix.

3. The bismuth-based overlay layer according to claim 1, wherein a hardness of the layer is 20 HV or more.

4. A sliding member comprising the bismuth-based overlay layer according to claim 1.

5. A method for manufacturing a sliding member comprising:
treating a surface of additive particles to control wettability of the surface;
charging the additive particles having the treated surface into a plating solution for bismuth or a bismuth alloy and stirring the solution;
providing a substrate of the sliding member; and
depositing the plating solution into which the additive particles are charged on a surface of the substrate of the sliding member to form a bismuth-based overlaying layer.

6. The manufacturing method according to claim 5, wherein an amount of the additive particles charged to the plating solution is from 15 g to 150 g per L of the plating solution.

7. The manufacturing method according to claim 5, wherein the surface of the additive particles is subjected to a plasma treatment or a UV irradiation treatment to improve the wettability of the surface to the plating solution.
